Europäisches Patentamt

European Patent Office

Office européen des brevets

(19)

(11) Veröffentlichungsnummer: **0 343 471**
**A1**

## EUROPÄISCHE PATENTANMELDUNG

(12)

(21) Anmeldenummer: 89108679.5

(22) Anmeldetag: 13.05.89

(51) Int. Cl.⁴: **C10G 1/08 , C10B 53/00**

(30) Priorität: 21.05.88 DE 3817437

(43) Veröffentlichungstag der Anmeldung:
29.11.89 Patentblatt 89/48

(84) Benannte Vertragsstaaten:
**AT BE CH DE GB IT LI NL SE**

(71) Anmelder: **Asea Brown Boveri**
**Aktiengesellschaft**
**Kallstadter Strasse 1**
**D-6800 Mannheim 31(DE)**

(72) Erfinder: **Betz, Monika, Dr. rer. nat.**
**Seestrasse 13**
**D-6834 Ketsch(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Verfahren zum Aufarbeiten von Abfallmaterial.**

(57) Verfahren zum Aufarbeiten von Kohlenwasserstoffe enthaltendem Abfallmaterial, insbesondere Kunststoffe enthaltendem Abfallmaterial.

Beim Aufarbeiten von Abfallmaterial durch Pyrolyse entstehen Halogenwasserstoffverbindungen enthaltende Gase, die durch die Zugabe von basischen Zuschlagmaterial neutralisiert werden. Da das abreagierte Zuschlagmaterial den Pyrolyserückstand vergrößert, ist es wünschenswert, die Dosierung des Zuschlagmaterials zu überwachen.

Es wird daher im leichtsiedenden Pyrolyseöl, das zusätzlich noch Wasserdampfkondensat enthält, der pH-Wert gemessen und in Abhängigkeit von der Messung die Dosierung des Zuschlagmaterials selbsttätig beeinflußt.

Hierdurch wird eine weitgehende, oder doch zumindest ausreichende Bindung der Schadstoffe mit geringem Einsatz von zuschlagmaterial erreicht.

EP 0 343 471 A1

## Verfahren zum Aufarbeiten von Abfallmaterial

Die Erfindung betrifft ein Verfahren zum Aufarbeiten von Kohlenwasserstoffe enthaltendem Abfallmaterial, insbesondere Kunststoffe enthaltendem Abfallmaterial, wobei das Abfallmaterial unter Zugabe von saure Schadstoffe bindendem Zuschlagmaterial einer Pyrolyse unterworfen wird, und das entstehende Pyrolysegas mindestens einer Vorkühlstufe zugeführt und in mindestens einer der Vorkühlstufe gasseitig nachgeschalteten weiteren Kühlstufe unter Gewinnung von leichtsiedendem Pyrolyseöl unter die Kondensationstemperatur von Wasserdampf gekühlt wird.

Das bei der Pyrolyse von Kohlenwasserstoffe enthaltendem Abfallmaterial, insbesondere Kunststoffabfällen, entstehende Pyrolysegas enthält Kohlenwasserstoffe sowie je nach Art und Zusammensetzung des Abfallmaterials mehr oder weniger Wasserdampf sowie eine Reihe von gasförmi gen Schadstoffen: Verbindungen des Stickstoffs, Chlors, Schwefels, Fluors und Cyanverbindungen. Von diesen Schadstoffen sind insbesondere die Halogene Chlor und Fluor äußerst aggressiv, so daß von den Pyrolysegasen beaufschlagte Metallteile besonders korrosionsfest und daher aufwendig ausgebildet sein müssen. In den Kühlstufen, in denen leichtsiedendes Pyrolyseöl durch Abkühlung des Pyrolysegases unter die Kondensationstemperatur von Wasserdampf, meist auf 30 bis 80° Celsius, ungefähr bei Umgebungsdruck gewonnen wird, nimmt das aus dem Wasserdampf des Pyrolysegases entstehende Wasser die vorgenannten Schadstoffe, insbesondere jedoch die Halogene Fluor und Chlor in Form ihrer Wasserstoffverbindungen auf. Durch diese Beladung mit Schadstoffen nimmt das Wasser die Eigenschaften einer Säure an, so daß auch die mit diesem Wasser in Berührung kommenden Bauteile säurefest sein müssen und daher entsprechend teuer sind. Darüber hinaus verursacht die Beseitigung dieses schadstoffbeladenen Wassers zusätzliche Kosten.

Zur Verringerung der Schadstoffbildung ist es daher üblich, ein basisches, feinkörniges Zuschlagmaterial, zweckmäßig Calciumcarbonat, Kalkhydrat, Calciumoxid, Magnesiumcarbonat, Magnesiumoxid, Dolomit oder Natriumhydroxid als Einzelstoff oder als beliebiges Gemisch dieser Einzelstoffe, während des Pyrolysevorgangs in den Pyrolysereaktor einzugeben, das heißt, die Pyrolyse in Anwesenheit dieser Stoffe durchzuführen. Hierdurch werden die sauren Schadstoffe unmittelbar nach ihrer Entstehung durch das basische Zuschlagmaterial weitgehend und im Grenzfall vollständig gebunden, so daß die Aggressivität des Pyrolysegases und des anfallenden Wassers beseitigt oder doch zumindest weitgehend verringert ist. In diesem Falle liegt der pH-Wert im Bereich um den Wert 7, im Idealfall exakt bei 7.

Das Zuschlagmaterial wird, bezogen auf das Abfallmaterial, meist im überstöchiometrischen Verhältnis zugegeben, das heißt, es wird mehr Zuschlagmaterial zugesetzt, als für die Bindung der Schadstoffe theoretisch nötig ist. Dies ist für eine sichere Bindung dieser Schadstoffe erforderlich. Die Menge an Zuschlagmaterial, die für die Bindung der Schadstoffe nötig ist, hängt von der Zusammensetzung des Abfallmaterials ab und wird rechnerisch anhand der Bestandteile des Abfallmaterials oder experimentell ermittelt. Da sich nun insbesondere im Langzeitbetrieb die Zusammensetzung des Abfallmaterials oft ändert und/oder die Pyrolysebedingungen, wie Pyrolysetemperatur und Durchmischung des Abfallmaterials mit dem Zuschlagmaterial, nicht konstant bleiben, ist es wünschenswert, solche Änderungen zu erfassen, damit die Zugabe des Zuschlagmaterials entsprechend angepaßt werden kann. Da das abreagierte Zuschlagmaterial den meist nicht verwertbaren Pyrolyserückstand vergrößert, ist auch aus diesem Grunde eine Überwachung der Dosierung des Zuschlagmaterials erforderlich, um unnötige Überdosierungen zu vermeiden.

Der Erfindung liegt daher die Aufgabe zugrunde, das eingangs genannte Verfahren zum Aufarbeiten von Abfallmaterial derart weiterzubilden, daß Änderungen der Schadstoffbindung selbsttätig erfaßt und Gegenmaßnahmen, insbesondere Anpassungen der Dosierung des Zuschlagmaterials, selbsttätig eingeleitet werden. Darüber hinaus soll das Verfahren ohne großen Aufwand durchzuführen und nicht störanfällig sein.

Die Lösung dieser Aufgabe für ein Verfahren der eingangs genannten Art besteht nun erfindungsgemäß darin, daß vom leichtsiedenden Pyrolyseöl eine Teilmenge abgezweigt und mit Wasser, dem ein Lösungsvermittler, vorzugsweise Aceton, zugesetzt ist, gemischt wird, daß das Pyrolyseöl-Lösungsvermittler-Wassergemisch einer pH-Wertmessung ($H^+$-Ionenkonzentrationsmessung) unterworfen wird, und daß im Falle eines Anstieges des pH-Wertes die Zugabe von Zuschlagmaterial selbsttätig verringert, im Falle einer Abnahme des pH-Wertes dagegen selbsttätig erhöht wird.

Da das leichtsiedende Pyrolyseöl und der gegebenenfalls im Pyrolysegas enthaltene Wasserdampf in der weiteren Kühlstufe kondensiert werden, der gasseitig wenigstens eine erste Kühlstufe vorgeschaltet ist, ist das in der weiteren Kühlstufe anfallende leichtsiedende Pyrolyseöl und Wasser weitgehend frei von Ruß- und/oder Schmutzstoffen. Denn diese Ruß- oder Schmutzstoffe werden in der ersten Kühlstufe, in der hochsiedendes Pyrolyseöl durch Kühlung gewonnen wird, zurückgehalten, nicht dagegen die sauren, gasförmigen Bestandteile des Pyrolysegases, die erst zusammen mit dem leichtsiedenden Pyrolyseöl in der weiteren Kühlstufe im Wasseranteil anfallen. Dieses Gemisch aus leichtsiedendem Pyrolyseöl und Flüssigkeit ist chemisch neutral, das heißt es besitzt den pH-Wert 7, falls durch die Zugabe des basischen Zuschlagmaterials die bei der Pyrolyse entstehenden gasförmigen sauren Bestandteile, insbesondere die Halogenwasserstoffe, exakt neutralisiert werden. Wird zuwenig Zuschlagmaterial zugespeist, so daß nicht sämtliche sauren Schadstoffe neutralisiert werden und ein Säureüberschuß vorhanden ist, so macht sich dies durch eine entsprechende Veränderung des pH-Wertes des Gemisches aus leichtsiedendem Pyrolyseöl und Wasser in der weiteren Kühlstufe bemerkbar, das heißt der PH-Wert fällt dort unter den Wert 7 ab. Wird dagegen mehr basisches Zuschlagmaterial bei der Pyrolyse zugesetzt, als für die Bindung der Schadstoffe erforderlich ist, so verläuft die Pyrolyse in basischer Atmosphäre und dementsprechend steigt der pH-Wert in der weiteren Kühlstufe über den Wert 7 an.

Um nun den pH-Wert in der weiteren Kühlstufe messen zu können, wird dem leichtsiedenden Pyrolyseöl, das schadstoffbeladenes Wasser enthält, eine Probe entnommen und mit dem Lösungsvermittler-Wassergemisch vermengt. Da in einer organischen Flüssigkeit, insbesondere in leichtsiedendem Pyrolyseöl, an für sich kein pH-Wert gemessen werden kann, ist der Zusatz des Lösungsvermittler-Wassergemisches erforderlich, in dem sowohl das leichtsiedende Pyrolyseöl als auch das schadstoffbeladene Wasser lösbar sind. Diese Mischung aus Lösungsvermittler, Wasser, leichtsiedendem Pyrolyseöl und schadstoffbeladendem Wasser wird dann einer pH-Wertmessung in einer üblichen pH-Wertmeßkette unterworfen und das Meßergebnis zur Korrektur der Zugabe des Zuschlagmaterials benutzt. Auf diese Weise ist sichergestellt, daß bereits während des Pyrolysevorgangs die entstehenden Halogenwasserstoffe enthaltenden Gase auf einfache Weise und mit geringem Aufwand an Zuschlagmaterial zumindest weitgehend neutralisiert werden.

Zweckmäßig wird ein Aceton-Wassergemisch verwendet, das vorzugsweise gleiche Volumenanteile Aceton und Wasser enthält.

Gemäß einer anderen Weiterbildung der Erfindung wird vorteilhaft die Teilmenge an leichtsiedendem und Wasser enthaltendem Pyrolyseöl kontinuierlich abgezweigt und kontinuierlich gemessen. Hierdurch wird auf einfache Weise eine dauernde Überwachung des Pyrolysevorganges erreicht. Hierbei wird zweckmäßig eine Teilmenge an Pyrolyseöl von ungefähr 1-2 Liter pro Stunde kontinuierlich abgezweigt.

Um die Kosten gering zu halten empfiehlt es sich, daß der Teilmenge an Pyrolyseöl, bezogen auf den Massenstrom, nur ungefähr 15 bis 30% Aceton-Wassergemisch beigemischt werden.

Gemäß einer bevorzugten Weiterbildung der Erfindung wird die Zugabe von Zuschlagmaterial in Zeitabständen von 10 bis 60 Minuten, vorzugsweise 20 bis 30 Minuten, entsprechend dem gemessenen pH-Meßwert korrigiert. Es werden also nicht fortlaufend Regeleingriffe vorgenommen, selbst dann nicht, wenn der pH-Wert von dem vorgesehenen Sollwert abweicht.

Vorzugsweise wird das Zuschlagmaterial bei einem Anstieg des pH-Wertes über den Wert 9 verringert, bei einem Abfall des pH-Wertes unter den Wert 5 dagegen erhöht. Die Pyrolyse verläuft somit in einem pH-Wertbereich der zwischen 5 und 9 liegt, der keine besondere Probleme bezüglich der Korrosion bereitet und der leicht einzuhalten ist.

Weitere Vorteile und Merkmale der Erfindung gehen aus der folgenden Beschreibung eines Ausführungsbeispiels im Zusammenhang mit den schematischen Zeichnungen hervor.

Hierbei zeigt:

Fig. 1 eine zur Durchführung des erfindungsgemäßen Verfahrens geeignete Pyrolyseanlage in schematischer Darstellung und

Fig. 2 die Einzelheit II der Fig. 1 in größerer Darstellung und im vertikalen Längsschnitt.

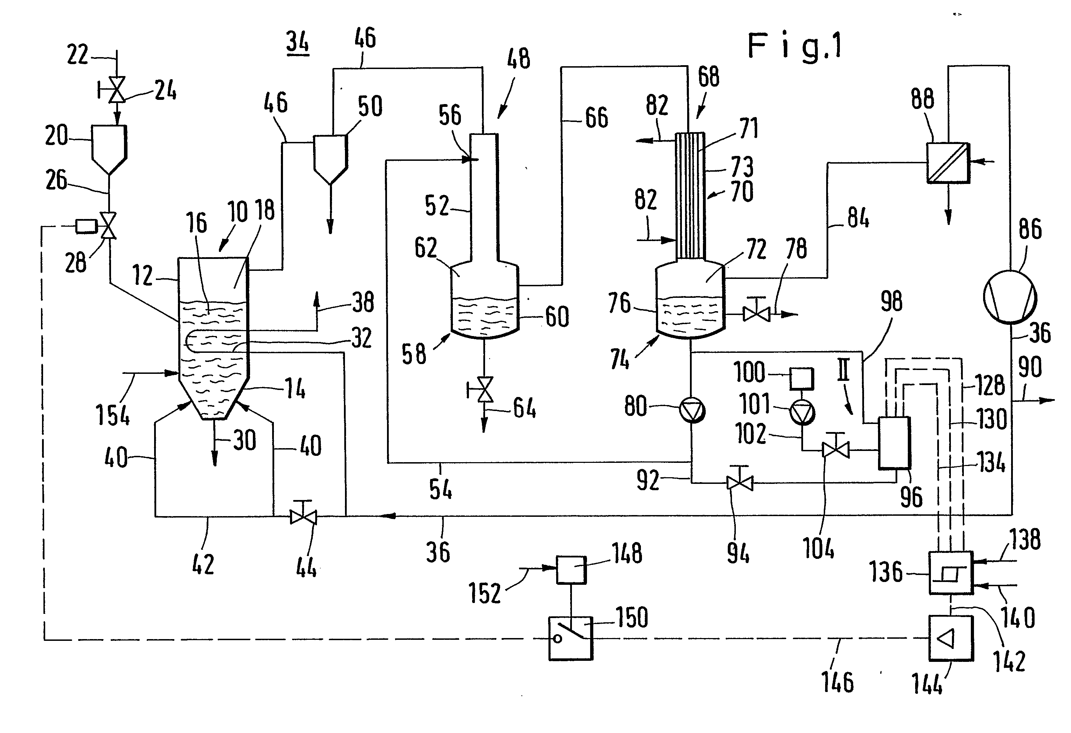

Gemäß Fig. 1 besitzt die Pyrolyseanlage einen stehenden Pyrolysereaktor 10 mit einem kreiszylindrischen, oberen Bereich 12 und einen sich nach unten daran anschließenden und sich verjüngenden kreiskegelförmigen Bereich 14. Im Pyrolysereaktor 10 wird ein Wirbelbett 16 derart ausgebildet, daß oberhalb des Wirbelbettes ein freier Gasraum 18 verbleibt, dessen Höhe ungefähr 20 bis 30% der Höhe des Pyrolysereaktors beträgt. Das Wirbelmaterial, mit dessen Hilfe das Wirbelbett erzeugt wird, ist feinkörnig und besteht zweckmäßig aus Sand, Aluminiumoxid oder dergleichen. Die Korngröße des Wirbelmaterials beträgt ungefähr 0,5mm.

Oberhalb des Pyrolysereaktors 10 ist ein Speicherbehälter 20 angeordnet, in den durch eine Rohrleitung 22 mit eingefügtem Absperrorgan 24 das vorzugsweise feinkörnige, pulverförmige Zuschlagmaterial eingebracht wird. Die Korngröße des Zuschlagmaterials beträgt höchstens 0,2mm. Der Speicherbehälter 20 ist durch die Rohrleitung 26 mit eingefügtem fernbetätigtem Absperr- und Regelorgan 28, vorzugsweise in Form eines Motorventils, mit Gefälle mit dem Pyrolyereaktor 10 verbunden, wobei die Rohrleitung 26 in das Wirbelbett 16 mündet.

Am unteren Ende des kreiskegelförmigen Bereiches 14 ist eine Abfuhrleitung 30 für den Pyrolyserückstand an den Pyrolysereaktor 10 angeschlossen, wobei ein in der Zeichnung nicht dargestelltes Absperr- und Regelorgan in diese Abfuhrleitung eingefügt ist.

In den oberen, kreiszylindrischen Bereich 12 des Pyrolysereaktors ist mindestens ein gasbefeuertes, haarnadelförmiges Heizrohr 32 vom Außenraum 34 her horizontal in das Wirbelbett 16 eingeführt. Zur Gasversorgung ist dieses Heizrohr an die Pyrolysegasleitung 36 angeschlossen, die das in der Pyrolyseanlage erzeugte brennbare Pyrolysegas führt. Desweiteren ist an das Heizrohr 36 noch eine nicht dargestellte Zufuhrleitung für Verbrennungsluft sowie eine Abgasleitung 38 für die Abfuhr des Abgases in den Außenraum angeschlossen.

Im unteren, kreiskegelförmigen Bereich 14 des Pyrolysereaktors münden mehrere Wirbelgasleitungen 40 in den Innenraum, wobei die Wirbelgasleitungen an eine Gasleitung 42 angeschlossen sind. Die Gasleitung 42 ist unter Zwischenschaltung eines Absperr- und Regelorgans 44 mit der Pyrolysegasleitung 36 verbunden. Die Ausblasrichtung der Wirbelgasleitungen 40 ist im Pyrolysereaktor nach unten gerichtet und verläuft ungefähr parallel zur Wand des Pyrolysereaktors.

Vom Gasraum 18 des Pyrolysereaktors führt eine Heißgasleitung 46 zur Vorkühlstufe 48, wobei ein Zyklonabscheider 50 in die Heißgasleitung eingefügt ist.

Die Vorkühlstufe 48 ist für direkte Kühlung des Pyrolysegases eingerichtet. Sie weist demnach einen vertikal verlaufenden, zylindrischen Wärmetauschkanal 52 auf, an dessen oberes Ende die Heißgasleitung 46 angeschlossen ist. Ebenfalls am oberen Ende des Wärmetauschkanals 52 ist eine Kühlmittelleitung 54 angeschlossen. Die Kühlmittelleitung ist hierbei mit einer Düse 56 versehen, mit deren Hilfe das Kühlmittel horizontal oder vertikal nach unten in den Wärmetauschkanal 52 eingesprüht wird.

Das untere Ende des Wärmetauschkanals mündet in einen zylindrischen ersten Abscheidebehälter 58, dessen unterer Bereich als Ölraum 60 und dessen oberer Bereich als Gasraum 62 dient. Der Ölraum 60 ist noch mit einer absperrbaren Leitung 64 versehen.

Vom Gasraum 62 des ersten Abscheidebehälters führt eine Verbindungsleitung 66 zur weiteren Kühlstufe 68. Die weitere Kühlstufe 68 arbeitet mit indirekter Kühlung und weist einen Vertikalrohrwärmetauscher 70 auf, wobei die Verbindungsleitung 66 an die oberen Enden der vertikalen Wärmetauschrohre 71 angeschlossen ist. Die unteren Enden der Wärmetauschrohre münden in einen Gasraum 72, der in einem zylindrischen zweiten Abscheidebehälter 74 oberhalb eines Leichtölraumes 76 ausgebildet ist. An den Leichtölraum 76 ist eine mit einem Absperrventil versehene Leitung 78 sowie unter Zwischenschaltung einer Pumpe 80 die Kühlmittelleitung 54 angeschlossen. Der Vertikalrohrwärmetauscher 70 ist noch mit Leitungen 82 versehen, durch die Kühlwasser zu- bzw. abgeführt wird. Der Vertikalrohrwärmetauscher 70 weist eine Vielzahl von vertikalen Wärmetauschrohren 71 auf, die in einem geschlossenen zylindrischen Behälter 73 angeordnet sind. In den Wärmetauschrohren strömt das abzukühlende Gas von oben nach unten, das Kühlwasser strömt im Behälter 73 von unten nach oben.

Der Gasraum 72 des zweiten Abscheidebehälters 74 ist durch eine Rohrleitung 84 mit der Saugseite eines Gasförderers 86 verbunden, der vorzugsweise als Verdichter ausgebildet ist. In die Leitung 84 ist zweckmäßig ein weiterer Kühler 88 eingeschaltet, in dem das Pyrolysegas in indirektem Wärmetausch weiter abgekühlt wird. Als Kühlmittel dient vorzugsweise Kühlwasser. Der weitere Kühler 88 ist in der Zeichnung nur schematisch angedeutet. In der Praxis ist es zweckmäßig, den weiteren Kühler 88 genauso aufzubauen wie die weitere Kühlstufe 68. In diesem Falle wird das beim Kühlen anfallende Kondensat, das aus Öl besteht, in einem Abscheidebehälter abgeschieden. Auch ist es zweckmäßig, einen in der Zeichnung nicht dargestellten Gaswäscher in die Leitung 84 einzufügen.

Der Ausgang des Gasförderers 86 ist an die Pyrolysegasleitung 36 angeschlossen. An diese Pyrolysegasleitung 36 sind, wie bereits weiter oben beschrieben, die Wirbelgasleitungen 40 sowie das Heizrohr 32 angeschlossen. Desweiteren ist an die Pyrolysegasleitung 36 eine Leitung 90 angeschlossen, durch die überschüssiges Pyrolysegas abgeführt und zweckmäßig als Brenngas zur Raumheizung eingesetzt wird.

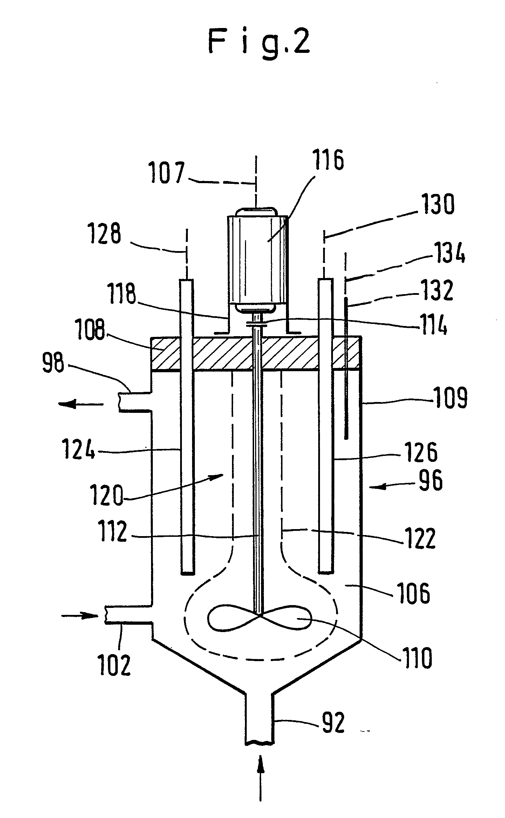

Auf der Druckseite der Pumpe 80 ist an die Kühlmittelleitung 54 eine Entnahmeleitung 92 angeschlossen, in die ein Regel- und Absperrorgan 94 eingefügt ist. Die lichte Weite der Entnahmeleitung 92 ist klein im Verhältnis zur lichten Weite der Kühlmittelleitung 54. Die Entnahmeleitung 92 führt zu einem pH-Wertmeßgerät 96 und sie ist an dessen Meßraum unten angeschlossen (siehe Fig. 2). Vom oberen Ende des Meßraums führt eine Rückflußleitung 98 zur Kühlmittelleitung 54 zurück und ist dort auf der Saugseite der Pumpe 80 angeschlossen. Die lichte Weite der Rückflußleitung 98 ist ungefähr gleich der lichten Weite der Entnahmeleitung 92. Im Bereich des pH-Wertmeßgeräts 96 ist ein vorzugsweise zylindrischer, stehender Behälter 100 für die Aufnahme des Wasser-Lösungsvermittler-Gemisches vorgesehen. Das untere Ende des Behälters 100 ist durch eine Rohrleitung 102 mit eingeschaltetem Regel- und Absperrorgan 104 an das pH-Wertmeßgerät angeschlossen und mündet dort in den unteren Bereich des Meßraums. Zusätzlich ist eine Pumpe 101 in die Rohrleitung 102 zwischen dem Behälter 100 und dem Regel- und Absperrorgan 104 eingefügt.

In Fig. 2 ist das pH-Wertmeßgerät 96 im vertikalen Zentralschnitt als Einzelheit und in größerem Maßstabe dargestellt. Man erkennt den Meßraum 106, in dessen unteres Ende die Entnahmeleitung 92 ungefähr zentrisch mündet. Desweiteren erkennt man den seitlichen Anschluß der Rückflußleitung 98 im oberen Bereich des Meßraums 106 sowie den seitlichen, unteren Anschluß der Rohrleitung 102. Der Meßraum 106 ist stehend in einem Behälter 109 ausgebildet, hat eine zylindrische Form und ist oben durch einen lösbaren Deckel 108 verschlossen.

In jenem Bereich, in dem die Rohrleitung 102 und die Entnahmeleitung 92 in den Meßraum 106 münden, ist ein Rührer 110, der ungefähr die Form eines Propellers aufweist, im Meßraum 106 angeordnet. Dieser Rührer 110 ist am unteren Ende einer vertikalen Antriebswelle 112 befestigt, die ungefähr im Bereich der Vertikalachse 107 des Meßraums 106 verläuft. Der obere Endbereich der Antriebswelle 112 durchdringt unter Abdichtung den Deckel 108 und ist mit Hilfe einer Kupplung 114 an die Antriebswelle eines stehenden Elektromotors 116 gekuppelt. Der Elektromotor 116 ist durch mehrere Füße 118 am Deckel 108 befestigt. Wie aus Fig. 2 weiter ersichtlich, ist der Rührer 110 und die Antriebswelle 112 im Meßraum 106 von einer Hülse 120 umgeben, deren Wand 122 mit Abstand zum Rührer 110 und zur Antriebswelle 112 verläuft. Die Wand 122 der Hülse ist als Sieb ausgebildet. Durch die Hülse 120 wird erreicht, daß im Falle eines Bruches des Rührers 110 wegfliegende Teile aufgefangen werden und somit nicht zu einer Beschädigung der Meßelektroden des pH-Wertmeßgeräts führen. Auf der anderen Seite wird durch die Ausbildung als Sieb bewirkt, daß die Funktion des Rührers 110, nämlich das Durchmischen der im Meßraum 106 vorhandenen Flüssigkeiten, nicht beeinträchtigt wird.

Seitlich der Hülse 120 sind zwei stabförmige Elektroden 124,126 durch den Deckel 108 ungefähr diametral in den Meßraum eingeführt. Diese Elektroden haben ungefähr die Richtung der Vertikalachse 107. Die eine dieser Elektroden ist eine Meßelektrode 124, die andere Elektrode ist eine Referenzelektrode 126. Die beiden Elektroden 124,126 sind durch den Deckel 108 nach außen geführt und an eine elektrische Meßleitung 128 bzw. an eine elektrische Referenzleitung 130 angeschlossen. Die beiden Elektroden bilden den Meßwertgeber, der eine der Wasserstoffionenkonzentration, das heißt dem pH-Wert proportionale elektrische Spannung abgibt. Anordnungen oder Geräte zur pH-Wertbestimmung sowie deren Elektroden sind durch den Stand der Technik bekannt und z.B. in "Meyers Lexikon der Technik und der exakten Naturwissenschaften" 1970, dritter Band, Seiten 1976/77 kurz beschrieben. In den Meßraum 106 taucht noch ein Temperaturfühler 132 ein, der als Widerstandsthermometer oder als Thermoelement ausgebildet ist. Der Temperaturfühler 132 durchdringt hierbei ebenfalls den Deckel 108 des pH-Wertmeßgerätes und endet im oberen Bereich des Meßraums 106. Zur Abnahme des Temperaturmeßwertes ist der Temperaturfühler mit einer elektrischen Temperaturmeßleitung 134 versehen.

Wie aus Fig. 1 zu ersehen ist, führen die Meßleitung 128, die Referenzleitung 130 und die Temperaturmeßleitung 134 zu einem elektrischen Schwellwertglied 136 mit Hysterese. Das Schwellwertglied hat einen ersten Einsteller 138 für den oberen Grenzwert des pH-Wertes und einen zweiten Einsteller 140 für den unteren Grenzwert des pH-Wertes. Im vorliegenden Ausführungsbeispiel wird am ersten Einsteller 138 ein pH-Wert von 9, am zweiten Einsteller ein pH-Wert von 5 eingestellt.

Der Ausgang des Schwellwertgliedes 136 ist durch eine elektrische Leitung 142 mit dem Eingang eines elektrischen Verstärkers 144 verbunden. An den Ausgang des Verstärkers 144 ist eine elektrische Leitung 146 angeschlossen, die zum fernbetätigten Absperr- und Regelorgan 28 führt. Hierbei ist in die elektrische Leitung 146 ein steuerbarer Schalter 150 eingefügt, der von einem Zeitglied 148 betätigt wird. Das Zeitglied 148 ist mit einem Einsteller 152 verbunden, der es gestattet, die Zeitintervalle einzustellen, in denen der Schalter 150 vom Zeitglied 148 vorzugsweise kurzzeitig geschlossen wird. Die Zeitspanne, in der der Schalter 150 vom Zeitglied 148 im geschlossenen Zustand gehalten wird, beträgt ungefähr 2 bis 8 Minuten. Die übrige Zeit bleibt der Schalter 150 geöffnet.

Zu bemerken ist noch, daß durch die Temperaturmeßleitung 134 die im Meßraum 106 durch den Temperaturmeßfühler 132 erfaßte Temperatur in das Schwellwertglied 136 eingegeben wird. Da der vom pH-Meßwertgerät 96 gemessene pH-Wert von der Temperatur des Mediums, das sich im Meßraum 106 befindet, abhängt, ist diese Maßnahme erforderlich und sie bewirkt die Kompensation des Temperatureinflusses.

Vor dem Betrieb der Anlage wird am ersten Einsteller 138 ein oberer Grenzwert des pH-Wertes eingestellt, der nicht überschritten werden soll. Im vorliegenden Beispiel ist dies der Wert 9. Entsprechend wird am zweiten Einsteller 140 der untere Grenzwert des pH-Wertes eingestellt, der nicht unterschritten werden darf. Im vorliegenden Fall ist dies der Wert 5.

Das Zeitglied 148 wird durch den Einsteller 152 so programmiert, daß der Schalter 150 fortlaufend in Zeitabständen von vorzugsweise 20 bis 30 Minuten schließt. Der Schalter 150 muß hierbei jeweils 2 bis 8 Minuten geschlossen bleiben und dann vom Zeitglied 148 wieder geöffnet werden. Dieser Vorgang wiederholt sich fortlaufend.

Während des Betriebs wird das in den Pyrolysereaktor eingegebene Wirbelmaterial, vorzugsweise Sand, mit Hilfe von Pyrolysegas verwirbelt, so daß das Wirbelbett 16 entsteht. Das Pyrolysegas wird hierbei durch die Wirbelgasleitungen 40 und die Gasleitung 42 aus der Pyrolysegasleitung 36 entnommen, als Wirbelgas wird somit Pyrolysegas verwendet, das durch den Gasförderer 86 auf einen Überdruck von 3 bis 6 bar gebracht wird. Hierbei wird der Fluß des Wirbelgases durch das Absperr- und Regelorgan 44 auf das erforderliche Maß eingestellt. Zur Beheizung des Wirbelbettes wird dem Heizrohr 32 ebenfalls Pyrolysegas aus der Pyrolysegasleitung 36 zugeführt und mit Hilfe von Luft verbrannt. Die Abgase strömen durch die Abgasleitung 38 ab, vorzugsweise in ein nicht dargestelltes Kamin. Zweckmäßigerweise sind mehrere Heizrohre 32 vorgesehen. Das Wirbelbett 16 wird durch das Heizrohr 32 auf die vorgesehene Mindesttemperatur von 500 bis 700° Celsius aufgeheizt.

Gleichzeitig wird in Richtung des Pfeiles 154 durch nicht dargestellte Eintragvorrichtungen, zweckmäßig Förderschnecken, das Abfallmaterial in das Wirbelbett 16 eingebracht. Das Abfallmaterial besteht zweckmäßig aus organischem Abfallmaterial, insbesondere Kunststoffabfällen. Das Abfallmaterial, das vor der Pyrolyse erforderlichenfalls kleinstückig gemacht wurde, wird im Wirbelbett 16 auf eine Mindesttemperatur von 500 bis 700° Celsius oder darüber erhitzt.

Hierbei wird das Abfallmaterial unter Bildung von Pyrolysegas thermisch zersetzt, wobei die im Abfallmaterial enthaltene Feuchte zum Teil gasförmig ausgetrieben und Bestandteil des Pyrolysegases wird. Zusätzlich werden bei der Zersetzung des Abfallmaterials, je nach dessen Beschaffenheit, de novo Wassermoleküle gebildet, die sich ebenfalls mit dem Pyrolysegas vermischen.

Da sich während der Pyrolyse saure, gasförmige Schadstoffe bilden, wird ein basisches, vorzugsweise pulverförmiges Zuschlagmaterial in das Wirbelbett 16 eingebracht. Dies geschieht mit Hilfe der Rohrleitung 26, die dieses Zuschlagmaterial dem Speicherbehälter 20 entnimmt. Dieses Zuschlagmaterial, das die eingangs genannten Stoffe umfaßt, wird durch die Rohrleitung 22 mit eingefügtem Absperrorgan 24 zuvor in den Speicherbehälter 20 eingefüllt.

Der Zustrom des Zuschlagmaterials vom Speicherbehälter 20 zum Wirbelbett 16 wird hierbei durch das fernbetätigte Absperr- und Regelorgan 28 dosiert, das in der Rohrleitung 26 angeordnet ist. Dieses Absperr- und Regelorgan 28 erhält Öffnungs- oder Schließimpulse durch die elektrische Leitung 146, die über den steuerbaren Schalter 150 zum Verstärker 144 führt.

Das Pyrolysegas sammelt sich im Gasraum 18 und wird mit Hilfe der Heißgasleitung 46 durch den Zyklonabscheider 50, in dem mitgeführte Festkörper abgeschieden werden, mit einer Temperatur von ungefähr 400 bis 800° Celsius der Vorkühlstufe 48 zugeführt, die mit direkter Kühlung arbeitet. Hier tritt das heiße Pyrolysegas in den Wärmetauschkanal 52 ein und strömt nach unten zum ersten Abscheidebehälter 58. Zur Kühlung des heißen Pyrolysegases wird dem zweiten Abscheidebehälter 74 kaltes leichtsiedendes Pyrolyseöl entnommen und durch die Pumpe 80 dem Wärmetauschkanal 52 zugeführt. Die Kühlung wird dadurch bewirkt, daß das leichtsiedende Pyrolyseöl durch die Düse 56 in den Wärmetauschkanal 52 eingesprüht wird und eine teilweise Kondensation des Pyrolysegases bewirkt. Im Wärmetauschkanal 52 strömt das Gemisch aus kondensiertem hochsiedendem Pyrolyseöl und gasförmigen Komponenten nach unten zum ersten Abscheidebehälter 58. Im Ölraum 60 des ersten Abscheidebehälters 58 sammelt sich das hochsiedende Pyrolyseöl (Siedepunkt bei Atmosphärendruck höher als 230° C) und wird durch die Leitung 64 mit eingefügtem Absperrorgan entnommen. Über dem Ölraum 58 sammelt sich das vorgekühlte und nicht kondensierte Pyrolysegas im Gasraum 62. Die Temperatur des vorgekühlten Pyrolysegases wird als Vorkühltemperatur bezeichnet. Diese soll im vorliegenden Ausführungsbeispiel ungefähr 180° Celsius betragen. Üblicherweise liegt sie in einem Bereich von 150 bis 230° Celsius. Das sich im Ölraum 60 befindende hochsiedende Pyrolyseöl hat ungefähr die gleiche Temperatur.

Während des Kühlvorgangs im Wärmetauschkanal 52 werden vom Pyrolysegas mitgeführte Ruß- und Schmutzteilchen ausgewaschen, sie werden vom hochsiedenden Pyrolyseöl aufgenommen und sind im Pyrolyseöl des Ölraums 60 enthalten. Jener Teil des Pyrolysegases der in der Vorkühlstufe nicht kondensiert, ist daher weitgehend frei von Ruß- und/oder Schmutzteilchen.

Das im Gasraum 62 sich sammelnde, nicht kondensierte Pyrolysegas strömt durch die Verbindungsleitung 66 zur weiteren Kühlstufe 68, die mit indirekter Kühlung arbeitet. Hier strömt das Pyrolysegas unter Abkühlung in den vertikalen Wärmetauschrohren 71 des Vertikalrohrwärmetauschers 70 nach unten zum zweiten Abscheidebehälter 74. Die Kühlung wird hierbei durch Kühlwasser bewirkt, das durch die Leitungen 82 zu- und abgeführt wird. Während der Abkühlung des Pyrolysegases entsteht in der weiteren Kühlstufe 68 ein leichtsiedendes Pyrolyseöl (Siedepunkt kleiner als 100° Celsi-

us), das sich unten im zweiten Abscheidebehälter 74, also im Leichtölraum 76 des zweiten Abscheidebehälters 74 sammelt. Das Pyrolysegas sammelt sich im darüber angeordneten Gasraum 62. Außer der Kühlmittelleitung 54 ist an den Leichtölraum 76 noch eine Leitung 78 mit eingefügtem Absperrventil angeschlossen, durch welche der Überschuß an leichtsiedendem Pyrolyseöl entnommen wird.

Das Pyrolysegas wird dem Gasraum 72 durch die Leitung 84 entnommen und durch den Kühler 88 einem Gasförderer 86 zugeführt, der zweckmäßig als Verdichter oder Gebläse ausgebildet ist. Der Gasförderer 86 drückt das Pyrolysegas in die Pyrolysegasleitung 36. Aus dieser Pyrolysegasleitung 36 werden das Heizrohr 32 und die Wirbelgasleitungen 40 mit Pyrolysegas versorgt. Das Pyrolysegas weist im Gasraum 72 eine Temperatur von ungefähr 30 bis 60° Celsius auf. Nach dem Kühler 88 beträgt die Temperatur des Pyrolysegases ungefähr 10 bis 20° Celsius und es ist jetzt frei von kondensierbaren Bestandteilen. Das für die Versorgung der Anlage nicht benötigte überschüssige Pyrolysegas wird durch die Rohrleitung 90 der Anlage entnommen und einer Weiterverwendung, z.B. als Brenngas für Heizungsanlagen, zugeführt.

Da die Kühlung des Pyrolysegases in der Vorkühlstufe 48 ungefähr bei Atmosphärendruck auf eine Temperatur höher als 150° Celsius stattfindet, bildet sich hier kein Wasser, dies bleibt vielmehr gasförmig und kondensiert erst in der weiteren Kühlstufe 68, deren Endtemperatur unterhalb der Kondensationstemperatur des Wasserdampfes liegt und die ebenfalls ungefähr bei Atmosphärendruck arbeitet. Im leichtsiedenden Pyrolyseöl, das sich im Leichtölraum 76 sammelt, ist daher noch ein Anteil an Wasser enthalten.

Von jenem Wasser enthaltendem leichtsiedendem Pyrolyseöl, das von der weiteren Kühlstufe 68 durch die Kühlmittelleitung 54 der Vorkühlstufe 48 zuströmt, wird auf der Druckseite der Pumpe 80 ein Teilstrom entnommen und durch die Entnahmeleitung 92 in den Meßraum 106 des pH-Meßwertgerätes 96 eingeführt (vergl. auch Fig. 2). Hierbei wird der Fluß des leichtsiedenden Pyrolyseöles mit Hilfe des Regel- und Absperrorgans 94 auf einen Wert von 1 bis 3 Liter pro Stunde eingestellt. Nach dem Durchströmen des Meßraumes 106 fließt das leichtsiedende Pyrolyseöl durch die Rückflußleitung 98 zur Saugseite der Pumpe 80 und mündet hierzu in die Verbindungsleitung zwischen Leichtölraum 76 und Pumpe 80.

Da das Regel- und Absperrorgan 104 geöffnet ist, strömt das im Behälter 100 gespeicherte Wasser-Lösungsvermittler-Gemisch in den Meßraum 106. Hierbei beträgt der Massenstrom des Lösungsvermittlers ungefähr 20 bis 30% jenes Massenstromes an leichtem Pyrolyseöl, der in der Entnahmeleitung 92 dem Meßraum 106 zufließt.

Der Elektromotor 116 wird durch nicht dargestellte elektrische Leitungen mit Strom versorgt, so daß er in Betrieb ist und den Rührer 110 antreibt. Dieser Rührer 110 bewirkt eine innige Vermischung von zuströmendem leichtem Pyrolyseöl und zufließendem Wasser-Lösungsvermittler-Gemisch. Dieses Gemisch wird mit Hilfe der Elektroden 128 und 130 einer pH-Wertmessung unterworfen, wobei gleichzeitig die Temperatur des Gemisches vom Temperaturfühler 132 erfaßt wird.

Von den beiden Elektroden 124 und 126 wird eine elektrische Spannung, welche vom pH-Wert der Flüssigkeit im Meßraum 106 abhängt, durch die elektrische Meßleitung 128 und die elektrische Referenzleitung 130 an das elektrische Schwellwertglied 136 abgegeben. Übersteigt der gemessene pH-Wert den Betrag des am Einsteller 138 vorgewählten oberen Grenzwertes des pH-Wertes, vorzugsweise den Wert 9, so wird ein Schließimpuls durch die elektrische Leitung 142 an den Verstärker 144 weitergeleitet und dort verstärkt. Der Verstärker leitet diesen Schließimpuls durch die elektrische Leitung 146 dem fernbetätigten Regel- und Absperrorgan 28 zu, das die Zufuhr von basischen Zuschlagmaterial zum Wirbelbett 16 jetzt drosselt oder erforderlichenfalls absperrt. Der pH-Wert fällt jetzt ab.

Da in der elektrischen Leitung 146 der steuerbare Schalter 150 eingefügt ist, kann das fernbetätigte Regel- und Absperrorgan 28 nur dann vom Verstärker 144 beeinflußt werden, wenn der Schalter 150 geschlossen ist. Die Schließung dieses Schalters wird vom Zeitglied 148 veranlaßt. Durch den Einsteller 152 ist das Zeitglied 148 nun derart programmiert, daß der Schalter 150 in Zeitabständen von zweckmäßig 20 bis 30 Minuten geschlossen wird. Der Schließzustand dauert dann ungefähr 2 bis 8 Minuten, daraufhin wird der Schalter 150 vom Zeitglied 148 wieder geöffnet zur laufenden Wiederholung des vorbeschriebenen Vorganges. Wie sich aus vorbeschriebenem ergibt, wird das fernbetätigte Regel- und Absperrorgan 28 nur in Zeitabständen von vorzugsweise 20 bis 30 Minuten in Abhängigkeit vom gemessenen pH-Wert beeinflußt. Dies ist vollständig ausreichend, da die Zusammensetzung des Abfallmaterials sich meist nicht plötzlich ändert. Darüber hinaus werden durch diese Maßnahme unerwünschte Pendelungen oder Schwankungen in der Zufuhr des Zuschlagmaterials zum Wirbelbett 16 vermieden.

Fällt nun der pH-Wert im Meßraum 96 ab und unterschreitet im vorliegenden Beispiel den pH-Wert 5, der am zweiten Einsteller 140 eingestellt ist, so wird vom Schwellwertglied 136 ein Öffnungsbefehl an den Verstärker 144 weitergegeben, dort verstärkt und über die elektrische Leitung 146 und den steuerbaren Schalter 150 an das fernbetätigte Absperr- und Regelorgan 28 weitergegeben.

Dieses verstärkt jetzt die Zufuhr des Zuschlagmaterials zum Wirbelbett 16, falls der Schalter 150, wie zuvor beschrieben, geschlossen hat. Durch die verminderte Zufuhr von basischem Zuschlagmaterial steigt jetzt der pH-Wert an.

Liegt der gemessene pH-Wert im Bereich zwischen den Werten 5 und 9, insbesondere beim Wert 7, so wird weder ein Öffnungsbefehl noch ein Schließbefehl an den Verstärker weitergeleitet, da in diesem Falle die Zufuhr des Zuschlagmaterials in einem für die Bindung der Schadstoffe richtigen Maße erfolgt.

Der pH-Wert des Gemisches aus leichtsiedendem Pyrolyseöl und Wasser des zweiten Abscheidebehälters wird auf vorbeschriebene Weise in den Grenzen zwischen den pH-Werten 5 und 9 gehalten. Durch andere Einstellungen des ersten und zweiten Einstellers 138 und 140 lassen sich diese Grenzwerte im Bedarfsfalle verändern.

Das leichtsiedende Pyrolyseöl enthält meist solche Verbindungen, die mit Wasser schlecht mischbar sind. Um sicherzustellen, daß die hier auftretenden sauren Komponenten durch die pH-Wertmessung erfaßt werden, wird der Lösungsvermittler benutzt. Der Lösungsvermittler ist mit Wasser sowie mit den organischen und den anorganischen, wässrigen Komponenten des leichtsiedenden Pyrolyseöls gut mischbar, so daß eine homogene Mischung entsteht, die eine Messung des Gesamt-pH-Wertes des leichtsiedenden Pyrolyseöls möglich macht.

## Ansprüche

1. Verfahren zum Aufarbeiten von Kohlenwasserstoffe enthaltendem Abfallmaterial, insbesondere Kunststoffe enthaltendem Abfallmaterial, wobei das Abfallmaterial unter Zugabe von saure Schadstoffe bindendem Zuschlagmaterial einer Pyrolyse unterworfen wird, und das entstehende Pyrolysegas mindestens einer Vorkühlstufe zugeführt wird und in mindestens einer der Vorkühlstufe gasseitig nachgeschalteten, weiteren Kühlstufe unter Gewinnung von leichtsiedendem Pyrolyseöl unter die Kondensationstemperatur von Wasserdampf gekühlt wird, dadurch gekennzeichnet, daß vom leichtsiedenden Pyrolyseöl eine Teilmenge abgezweigt und mit Wasser, dem ein Lösungsvermittler, vorzugsweise Aceton, zugesetzt ist, gemischt wird, daß das Gemisch einer pH-Wertmessung ($H^{+}$-Ionenkonzentrationsmessung) unterworfen wird, und daß im Falle eines Anstieges des pH-Wertes die Zugabe von Zuschlagmaterial selbsttätig verringert, im Falle einer Abnahme dagegen selbsttätig erhöht wird.

2. Verfahren nach Anspruch 1, dadurch gekennzeichnet, daß ein Aceton-Wassergemisch verwendet wird, das gleiche Volumenanteile Aceton und Wasser enthält.

3. Verfahren nach Anspruch 1 oder 2, dadurch gekennzeichnet, daß die Teilmenge an leichtsiedendem Pyrolyseöl kontinuierlich abgezweigt und kontinuierlich gemessen wird.

4. Verfahren nach mindestens einem der Ansprüche 1 bis 3, dadurch gekennzeichnet, daß eine Teilmenge Pyrolyseöl von ungefähr 1 bis 3 Liter pro Stunde abgezweigt wird.

5. Verfahren nach mindestens einem der Ansprüche 1 bis 4, dadurch gekennzeichnet, daß der Teilmenge an Pyrolyseöl, bezogen auf den Massenstrom, 15 bis 30% Lösungsvermittler beigemischt wird.

6. Verfahren nach mindestens einem der Ansprüche 1 bis 5, dadurch gekennzeichnet, daß die Zugabe des Zuschlagmaterials in Zeitabständen von 15 bis 60 Minuten, vorzugsweise 20 bis 30 Minuten, korrigiert wird.

7. Verfahren nach mindestens einem der Ansprüche 1 bis 6, dadurch gekennzeichnet, daß die Zufuhr von Zuschlagmaterial bei einem Anstieg des pH-Wertes über den Wert 9 verringert, bei einem Abfall unter den Wert 5 dagegen erhöht wird.

Fig.1

EP 0 343 471 A1

# F i g.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 286 595 (K.K.K. KROYER)<br>* Ansprüche 1,2,3 *<br>----- | 1,7 | C 10 G 1/08<br>C 10 B 53/00 |

RECHERCHIERTE SACHGEBIETE (Int, Cl.4)

C 10 G
C 10 B

Der vorliegende Recherchenbericht wurde für alle Patentansprüche erstellt

| Recherchenort | Abschlußdatum der Recherche | Prüfer |
|---|---|---|
| DEN HAAG | 12-07-1989 | DE HERDT O.C.E. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes
    Dokument

EPO FORM 1503 03.82 (P0403)